# EUROPEAN PATENT APPLICATION

(11) **EP 0 838 325 A2**
(43) Date of publication of application: **29.04.1998**
(21) Application number: 97308460.1
(22) Date of filing: 23.10.1997
(51) Int. Cl.: B29C 65/34, B65D 5/74

(54) **Improvements in or relating to fitments for attaching to walls and apparatus and methods of applying same**

(30) Priority: 28.10.1996 US 738797
(71) Applicant: ELOPAK SYSTEMS AG, 8152 Glattbrugg (CH)
(72) Inventor: Lukasiewicz, Anthony John, Howell, Michigan 48843 (US)
(74) Representative: Burrows, Anthony Gregory

(57) **Abstract**

A pour spout fitment 16, for mounting on a selected panel of a filled and sealed container around a hole formed in the selected panel, includes a cylindrical body 18 having an external flange 20 formed adjacent one end thereof, a band 22 of thermoplastic material secured around the outer face of the flange 20, a current-conductive wire 24 confined within the band 22, and a first pair of terminals 26 formed at the respective ends of the wire 24. An anvil 28 is mountable around the cylindrical body 18 to bear against the flange 20. A second pair of terminals 32 formed at an end face 30 of the anvil 28 co-operates with the first pair of terminals 26, and a pair of wire leads 34 extends through the anvil 28 to the second pair of terminals 32 for connecting with the first pair of terminals 26 to send a current through the wire 24 to melt the thermoplastic material 22 to enable the fitment 16 to bond to the panel 14 under the pressure of the anvil 28.

## Description

This invention relates generally to fitments for attaching to walls, and apparatus for applying such fitments to such walls, and, more particularly, to a pour spout fitment having inherent provisions for electrically causing the pour spout fitment to become sealed to a packaging container.

Heretofore, pour spout fitments have been secured to thermoplastic-coated container panels by the following known methods.

In US-A-4,813,578, the following method is employed: A mandrel is inserted into the interior of the still-open mouth of the container, with the mandrel abutting the interior surface of a barrier layer and forming a back-up support. Hot air or radiant heat is applied to the external surface of a gable top wall immediately around an opening to thereby soften the polyethylene coating, with a pour spout fitment flange placed on the softened layer to thereby adhere the flange to the wall. An external mandrel is also employed to press the assembly against the internally positioned mandrel. This pressure is maintained until the coating cools and thereby effects permanent adhesion of the flange to the wall. It is also disclosed that other methods, such as ultrasonic adhesion and impulse heating, may be employed.

US-A- 5,249,695 merely recites that attachment to the polymer-coated paperboard panel is accomplished by welding or otherwise adhering a spout fitment flange to the polymer coating.

US-A-4,964,562, US-A-5,152,438, and GB-A-2,238,287 each utilize an ultrasonic sealing horn and a back-up support member operative to seal pour spout fitment flanges around respective pouring apertures.

US-A-4,669,640 suggests fusing a pour spout flange to an inside surface of a carton gable top either thermally or ultrasonically.

US-A-5,088,643 states that the pour spout fitment is preferably adhered to the outer surface of the container panel by impulse heating under pressure such as ultrasonic sealing and that other methods may be used as desired.

US-A-4,483,464 discloses a container having an adhesive film mounted on an inner surface of the container across and around an opening, and adapted to be pierced by pressing down on a pouring spout having a blade-like inner end.

US-A-4,925,034 discloses adhesively bonding a pour spout fitment by a hot melt glue to a top outer surface of a container.

US-A-5,101,999 suggests that a spout or closure be attached to the package top by any suitable means such as an adhesive applied to a bottom surface of the closure to be attached to the package top. Where the package is coated with an outer thermoplastic layer of polyethylene, which discourages such adhesion, it discloses the use of perimeter cuts which may be serrated or applied as perforated cuts. Such serrations or perforated cuts need only penetrate the polyethylene outer layer to allow the adhesive to bond with the underlying carrier or paper layer.

US-A-,4,363,420 and US-A-4,588,105 disclose sealing plugs having a sealant ring mounted thereon which is melted upon the application of heat to become bonded to an adjacent surface.

US-A-4,909,434 discloses in Figure 10 a support anvil and in Figure 11 a heating anvil, each of which includes a current-carrying wire for softening the plastic of a pouring spout for attachment to a carton.

US-A-5,110,041 and US-A-5,304,265 disclose sealing apparati and methods for sealing plastic spout fitments to carton blanks, wherein a hot anvil or sealing head is equipped with heating elements for applying heat to tackify a hot-melt adhesive applied to the fitment just prior to pressing against the carton blank.

JP-A-61-213126 discloses a method of melt-bonding together a plurality of moulded articles of synthetic resin in which a ring-shaped metal substance is placed between the articles and a heating electrical current is induced therein by means of a high-frequency induction coil substantially coaxial with the ring-shaped substance.

JP-A-61-225027 discloses melt-bonding of a cup of synthetic resin to an inside surface of a wall of a fuel tank also of synthetic resin. It discloses both a conductive heating embodiment and an inductive heating embodiment. In the conductive heating embodiment, the cup has an electrical resistance wire bonded thereto and then the cup is applied to the base wall of the fuel tank by a plunger, and an electric current is passed through the wire to melt both a base wall portion of the cup and the fuel tank wall portion therebelow to bond the cup to the fuel tank wall. In the inductive version, an iron piece between the cup and the wall portion of the tank is heated by high frequency induction by an electrical coil outside the tank, again to melt-bond the cup and the fuel tank wall to each other.

According to one aspect of the present invention, there is provided a fitment for attaching to a wall, comprising a body, plastic surface portions on said body for heat-sealing to said wall to attach said fitment to said wall, and electrical circuit means carried by said body for having electric current passed therethrough to heat said surface portions and thereby render said surface portions tacky for heat-sealing to said wall, characterized in that said fitment is in the form of a packaging fitment for attaching to a wall of a packaging container, and in that said electrical circuit means is spaced inwardly from said surface portions.

According to a second aspect of the present invention, there is provided a method of attaching a fitment to a wall, comprising passing electric current through electrical circuit means carried by a body of a fitment and thereby heating plastic surface portions on said body and thus rendering said surface portions tacky, and attaching the fitment to the wall by way of the tacky surface portions, characterized in that said fitment is in the form of a packaging fitment, said wall is a wall of a packaging container, and said electrical circuit means is spaced inwardly from said plastic surface portions throughout said heating of said plastic surface portions.

According to a third aspect of the present invention, there is provided in combination:
a fitment for attaching to a wall, comprising a body, plastic surface portions on said body for heat-sealing to said wall to attach said fitment to said wall, and first electrical circuit means carried by said body for having electric current passed therethrough to heat said surface portions and thereby render said surface portions tacky for heat-sealing to said wall, and pressure-applying means for applying pressure against said fitment, thereby to press said fitment against said wall, characterized in that said pressure-applying means comprises second electrical circuit means energisible to cause electric current to pass through said first circuit means.

According to a fourth aspect of the present invention, there is provided a method of attaching a fitment to a wall, comprising energizing second electrical circuit means to cause the passing of electric current through first electrical circuit means carried by a body of a fitment and thereby heating plastic surface portions on said body and thus rendering said surface portions tacky, and attaching the fitment to the wall by way of the tacky surface portions, characterized by mounting said fitment on transporting means comprised of second electrical circuit means, displacing said transporting means and thus said fitment relative to said wall to bring said fitment into a desired position relative to said wall, and then performing said attaching.

According to a fifth aspect of the present invention, there is provided in combination:
a fitment for attaching to a wall, comprising a body, plastic surface portions on said body for heat-sealing to said wall to attach said fitment to said wall, and first electrical circuit means carried by said body for having electric current passed therethrough to heat said surface portions and thereby render said surface portions tacky for heat-sealing to said wall, characterized by transporting means on which said fitment is mountable and which is displaceable to displace said fitment into a desired position, said transporting means comprising second electrical circuit means energisible to cause electric current to pass through the first circuit means.

Owing to the invention, it is possible to provide an improved packaging fitment (e.g. a pour spout fitment) and apparatus for applying same to a wall (e.g. a selected panel) of a packaging container. Since the walls of packaging containers, especially of packaging cartons, tend to be relatively thin and/or of relatively delicate materials, e.g. paperboard coated on both faces with thermoplastic, possibly with the interposition of an oxygen barrier material, such as metal foil or thermoplastic, they are susceptible to being damaged by being brought into direct contact with a source of heat, so that the spacing of the electrical circuit means carried by the fitment from the container-contacting surface of the fitment reduces the risk of such damage. Furthermore, with that electrical circuit means energized, particularly conductively supplied, by second electrical circuit means, the second electrical circuit means can be used in transporting the fitment to bring it to a desired position and/or in applying force to the fitment to produce a required sealing pressure between the fitment and the wall.

The fitment may inherently include provision for heating thermoplastic formed thereon in order to become sealed to the wall.

Preferably, the fitment is a pour spout fitment having a flange thereon, with a band of thermoplastic formed on the flange, and a wire extending through the centre of the band and adapted to being heated by electrical current to melt the thermoplastic and seal same to a packaging container wall. There is preferably also provided an anvil which comprises, or is equipped with, electrical conductors which, upon engagement of the anvil against the back of the fitment flange, produce a current through the wire to melt the surrounding thermoplastic to thereby cause the latter to melt and become sealed to the container wall.

In order that the invention may be clearly and completely disclosed, reference will now be made, by way of example, to the accompanying drawings, in which:-
Figure 1 is a perspective view of a gable top container having an opening formed in a selected panel thereof, and a pour spout fitment and its cap adapted to be mounted on and sealed to the container panel;
Figure 1A is a fragmentary perspective view of a flat top container onto which a pour spout fitment may be mounted;
Figure 1B is a fragmentary perspective view of a modified container panel;
Figure 2 is an axial section through a sealing apparatus shown in conjunction wit the pour spout fitment;
Figure 3 is an end view taken from the right in Figure 2;
Figure 4 is an end view of a modified version of the sealing apparatus shown in conjunction with a pour spout fitment and a container; and
Figure 5 is a view similar to Figure 4, but showing another modified version of the sealing apparatus in conjunction with a pour spout fitment and a container.

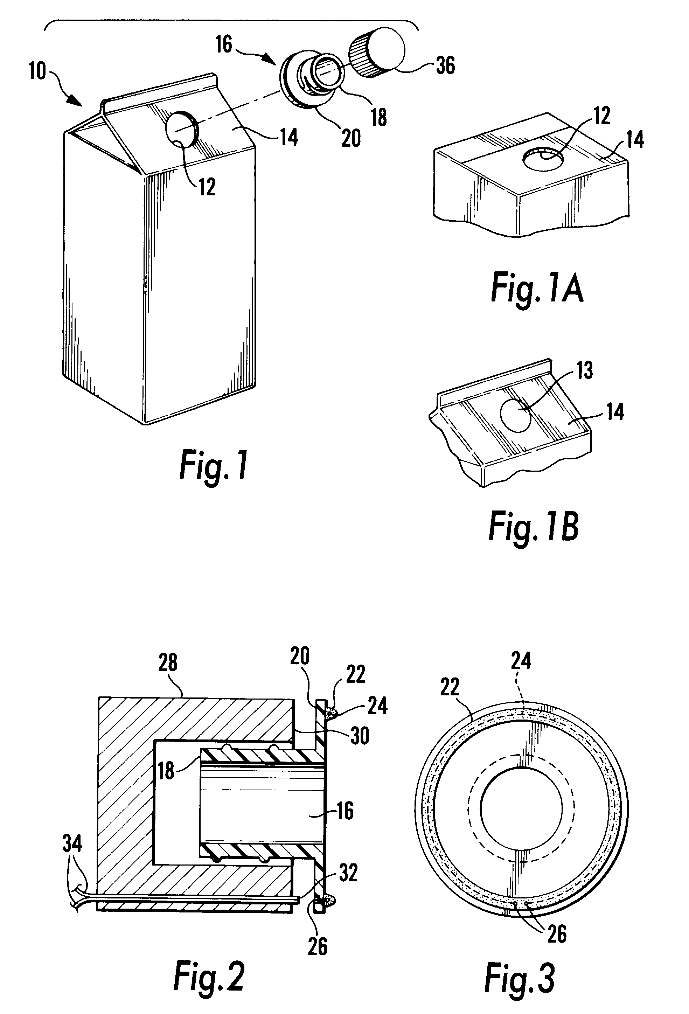

Referring to the drawings, Figure 1 illustrates a filled and sealed gable top type container 10 having an opening 12 or a weakened line 13 (Figure 1B) formed in a selected panel 14 thereof. The container consists of paperboard coated on both surfaces with polyethylene. A pour spout fitment 16 includes a cylindrical body 18 having an external mounting flange 20. As shown in Figure 1A, the container may instead be a flat top type container.

An annular band 22 (Figure 2) of polyethylene or other suitable thermoplastic material is formed on the outer surface of the flange 20. An electrically conductive wire 24 extends through the centreline of the band 22, with a pair of socket-form terminals 26 (Figures 2 and 3) extending through the flange 20.

A cup-shaped anvil 28 (Figure 2) is adapted to mount around the body 18 with an end face 30 of the anvil to seat on the back of the flange 20. A pair of pin-form terminals 32 is provided on the end face 30 to enter the pair of terminals 26. A pair of wire leads 34 extends longitudinally through a wall of the anvil 28 to the pair of terminals 32. As such, current sent through the wire leads 34 to the pair of terminals 26 transmits through the wire 24 in the band 22 to thereby melt the polyethylene. The anvil receives the fitment 16 from a feeding chute (not shown), transports the fitment to the container 10 and places the fitment 16 and its band 22 on the container panel 14 around the opening 12, or the weakened line 13. Owing to the pressure of the anvil end face 30 against the flange 20 the melted polyethylene, on cooling, will bond the flange to the panel 14 around the opening 12. Throughout this process, particularly throughout the heating by the wire 24, the wire remains spaced inwards from those surface portions of the band 22 nearest the panel 14 and thus remains spaced away from the panel 14, to avoid damage to the outer polyethylene layer of the panel

The container 10 in its filled and sealed condition is sufficiently rigid to withstand the pressure of the anvil 28 against the flange 20 during the melting and bonding operation.

A suitable screw cap or other type cap 36 (Figure 1) is mounted on the cylindrical body 18, until time to pour the contents of the container through the pour spout fitment 16.

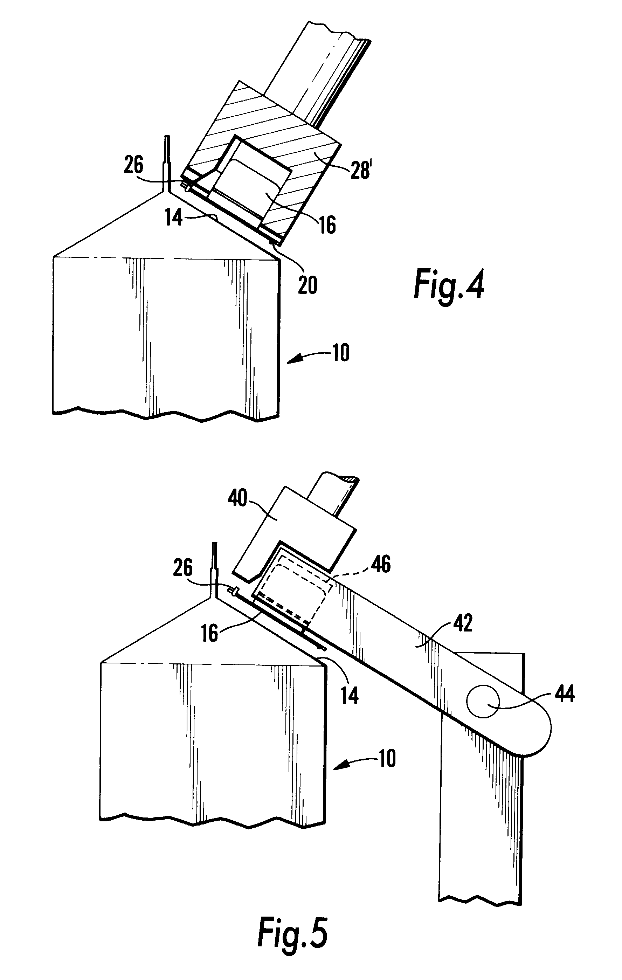

In the modified version shown in Figure 4, the pressing anvil 28' itself is also a double electrode supplying electric current to the terminals 26. Thus the anvil 28', which is displaceable perpendicularly to the panel 14, performs three functions: it transports the fitment 16 to an accurate position relative to the gable-top carton 10, it supplies current to the terminals 26, and it presses the fitment 16 against the panel 14.

An advantage of the versions shown in Figures 2 and 4 is that the electric current can be supplied to the wire 24 while the fitment 16 is being transported to the panel 14 by the anvil 28 or 28', so that the band 22 arrives at the panel 14 in an already heated condition.

In the other modified version shown in Figure 4, a double electrode 40 for supplying current to the terminals 26 is displaceable perpendicularly to the panel 14, but is separate from a transporting and pressing anvil 42 which is in the form of an arm turnable about a horizontal pivot 44. The outer end of the arm 42 is formed with a recess 46 receiving the fitment 16. Once the fitment 16 is pressed against the panel 14, the electrode 40 contacts the terminals 26 and the band 22 is heated.

It should be apparent that the general embodiment described with reference to the drawings provides an improved pour spout fitment and anvil combination for applying the fitment to a container.

It should also be apparent that the weakened line may be a continuous score line, or a partial-depth cut, formed in a selected container panel.

While but one general embodiment of the invention has been shown and described, modifications may be made. For example, although the present electrical heating arrangement is particularly useful in a system where, as described, the pour spout fitment is mounted from the outside of the container, it is also useful in a system where the pour spout fitment is mounted from the inside of the container, with the flange 20 being heat-and pressure-sealed to the inside surface of the container. Moreover, although, as described and preferably, the fitment is received in the anvil 28, 28', or 42, prior to application of the fitment to the wall, the fitment could be placed on the wall prior to the anvil receiving the fitment. Furthermore, the electrical heating element does not need to take the form of a wire 24; it could take any other suitable form, for example a strip or an electrically conductive layer. Although the electric current in that element has been described as being supplied by conduction, it is possible that it could be supplied by induction. The element could be incorporated in the fitment during moulding of the fitment, rather than being applied thereto subsequently; in which case the moulded fitment will need to incorporate or consist of plastics material. Although thermoplastics material has been referred to as providing the heat-sealing material, it is possible that the heat-sealing material could be thermosetting instead. Finally, the fitment need not be a pour spout fitment but a fitment of another kind, and the wall need not be that of a carton but could be that of another kind of packaging container, or even be a wall outside the packaging field altogether.

## Claims

1. A fitment for attaching to a wall, comprising a body (18), plastic surface portions on said body (18) for heat-sealing to said wall (14) to attach said fitment (16) to said wall (14), and electrical circuit means (24) carried by said body (18) for having electric current passed therethrough to heat said surface portions and thereby render said surface portions tacky for heat-sealing to said wall (14), characterized in that said fitment (16) is in the form of a packaging fitment (16) for attaching to a wall (14) of a packaging container (10), and in that said electrical circuit means (24) is spaced inwardly from said surface portions.

2. A fitment according to claim 1, and in the form of a pour spout fitment (16).

3. A fitment according to claim 1 or 2, wherein said electrical circuit means (24) comprises an electrically conductive wire (24).

4. A fitment according to any preceding claim, wherein said plastic surface portions are of a plastic band (22) applied to said body.

5. A fitment according to claim 4 as appended to claim 3 as appended to claim 2, wherein said pour spout fitment (16) is for attaching to the outside of a selected wall (14) of a filled and sealed container (10), around a hole (12) or weakened line (13) formed in the wall (14), said body (18) has an external flange (20) formed with an exposed end face, said plastic band (22) is secured around the end face, and said wire (24) is confined within said band (22), said fitment (16) further comprising a pair of terminals (26) formed at respective adjacent ends of the wire (24) and accessible from the back of the flange (20).

6. A method of attaching a fitment (16) to a wall (14), comprising passing electric current through electrical circuit means (24) carried by a body (18) of a fitment (16) and thereby heating plastic surface portions on said body (18) and thus rendering said surface portions tacky, and attaching the fitment (16) to the wall (14) by way of the tacky surface portions, characterized in that said fitment (16) is in the form of a packaging fitment (16), said wall (14) is a wall (14) of a packaging container (10), and said electrical circuit means (24) is spaced inwardly from said plastic surface portions throughout said heating of said plastic surface portions.

7. A method according to claim 6, and further comprising pressing an anvil (28) against said fitment (16), thereby to press the tacky surface portions against said wall (14).

8. A method according to claim 7, and further comprising, prior to said pressing of said anvil (28) against said fitment (16), receiving said fitment (16) in said anvil (28).

9. A method according to claim 7 or 8, and further comprising, prior to said pressing of said anvil (28) against said fitment (16), bringing a first pair of electrical terminals (26) of said electrical circuit means (24) into electrically conductive contact with a second pair of electrical terminals (32) of a second electrical circuit means (34) carried by said anvil (28) and energisible to supply electric current to said first pair of terminals (26).

10. A method according to any one of claims 6 to 9 and preceded by filling and sealing said container (10).

11. In combination:
a fitment (16) for attaching to a wall (14), comprising a body (18), plastic surface portions on said body (18) for heat-sealing to said wall (14) to attach said fitment (16) to said wall (14), and first electrical circuit means (24) carried by said body (18) for having electric current passed therethrough to heat said surface portions and thereby render said surface portions tacky for heat-sealing to said wall (14), and pressure-applying means (28, 34; 28') for applying pressure against said fitment (16), thereby to press said fitment (16) against said wall (14), characterized in that said pressure-applying means (28, 34; 28') comprises second electrical circuit means (34; 28') energisible to cause electric current to pass through said first circuit means (24).

12. A combination according to claim 11, wherein said pressure-applying means (28, 34; 28') serves also to transport said fitment (16) into position relative to said wall (14).

13. A combination according to claim 11 or 12, wherein the first and the second electrical circuit means (24, 34; 24,28') have, respectively, first and second pairs of electrical terminals (26, 32; 26, 28') arranged to make electrical contact with each other when said pressure-applying means (28,34;28') and said fitment (16) come together.

14. A combination according to claim 11, 12 or 13, wherein said plastic surface portions are of a plastic band (22) applied to said body (18) and for engaging said wall (14).

15. A combination according to claim 14, wherein said body (18) has a flange (20) formed on one end thereof, with said band (22) being secured to an end face of said flange (20), and said pressure-applying means (28, 34; 28') is adapted to apply pressure against the opposite face of said flange (20).

16. A combination according to claim 15, wherein said pressure-applying means (28, 34; 28') is cup-shaped and adapted to mount over said body (18) to abut against said opposite face of said flange (20).

17. A method of attaching a fitment to a wall, comprising energizing second electrical circuit means (34) to cause the passing of electric current through first electrical circuit means (24) carried by a body (18) of a fitment (16) and thereby heating plastic surface portions on said body (18) and thus rendering said surface portions tacky, and attaching the fitment (16) to the wall (14) by way of the tacky surface portions, characterized by mounting said fitment (16) on transporting means (28, 34; 28') comprised of second electrical circuit means (34; 28'), displacing said transporting means (28, 34; 28') and thus said fitment (16) relative to said wall (14) to bring said fitment (16) into a desired position relative to said wall (14), and then performing said attaching.

18. A method according to claim 17, wherein said attaching comprises pressing said transporting means (28,34; 28') against said fitment (16), thereby to press the tacky surface portions against said wall (14).

19. In combination:
a fitment (16) for attaching to a wall (14), comprising a body (18), plastic surface portions on said body (18) for heat-sealing to said wall (14) to attach said fitment (16) to said wall (14), and first electrical circuit means (24) carried by said body (18) for having electric current passed therethrough to heat said surface portions and thereby render said surface portions tacky for heat-sealing to said wall (14), characterized by transporting means (28,34; 28') on which said fitment (16) is mountable and which is displaceable to displace said fitment (16) into a desired position, said transporting means (28,34; 28') comprising second electrical circuit means (34; 28') energisible to cause electric current to pass through the first circuit means (24).

20. A combination according to claim 19, wherein said transporting means (28,34; 28') serves to apply pressure against said fitment (16), thereby to press said fitment (16) against said wall (14).
